# FASCICULE DE BREVET EUROPEEN

(11) **EP 1 446 459 B1**
(45) Date de publication et mention de la délivrance du brevet: **15.11.2006**
(21) Numéro de dépôt: 02796804.9
(22) Date de dépôt: 14.10.2002
(51) Int. Cl.: C09K 8/38

(54) **METHODE DE FORAGE DE PUITS ET FLUIDE DE FORAGE**
BOHRVERFAHREN UND BOHRSPÜLUNG
WELL DRILLING METHOD AND DRILLING FLUID

(30) Priorité: 26.10.2001 GB 0125685
(43) Date de publication de la demande: 18.08.2004
(73) Titulaire: Institut Français du Pétrole, 92852 Rueil-Malmaison Cedex (FR); Imperial Chemical Industries Plc., London W1U 3AN (GB)
(72) Inventeur: GRAINGER, Neil, Stockton-on-Tees, Cleveland TS17 5EU (GB); HERZHAFT, Benjamin, F-92150 Suresnes (FR); WHITE, Mark, Aberdeenshire, Scotland AB51 3QJ (GB); AUDIBERT-HAYET, Annie, F-78290 Croissy sur Seine (FR)
(86) Numéro de dépôt international: PCT/FR2002/003497
(87) Numéro de publication internationale: WO 2003/035794

(56) Documents cités:
- DE-A- 10 035 617
- DE-C- 19 954 830
- US-A- 3 297 098
- US-A- 4 524 002
- US-A- 5 389 607
- US-A- 5 714 001

## Description

La présente invention concerne le forage de puits, en particulier des puits de pétrole et/ou des puits de gaz, utilisant un fluide de forage sous forme de mousse.

Les fluides de forage sous forme de mousse aqueuse sont typiquement utilisés lors du forage de puits dans des conditions dites de « sous-équilibre » (ou allégées), c'est-à-dire lorsque, au niveau du forage, la pression du fluide de puits est inférieure à celle qui règne dans la roche aux alentours du puits. En général, on prépare la mousse au niveau de la tête de puits en mélangeant une solution de tensioactif et un gaz au moyen d'un dispositif de mélange du commerce, puis elle est injectée dans le puits par pompage jusqu'à la zone de forage, généralement au milieu de la garniture de forage, et dans l'espace généralement annulaire entre la garniture de forage et la paroi du puits, autour de la tête de forage, afin d'envelopper les déblais de forage et de les ramener à la tête de puits à travers l'espace annulaire. Les déblais sont ensuite séparés du fluide avant d'être évacués. Les mousses constituent un bon support pour les déblais de forage et pour leur évacuation, et elles assurent un faible endommagement de la formation en cas de forage dans des conditions de sous-équilibre (lorsque la pression dans le fluide forage est inférieure à la pression de pore dans la roche environnante).

Afin de constituer des fluides de forage efficaces, ces mousses doivent présenter une grande stabilité dans des conditions de fond tout en présentant une capacité de rupture importante au retour à la surface, de manière à éviter la manipulation de grands volumes de mousse à la surface et à permettre la séparation des déblais et du fluide de forage. Ce changement de propriétés est généralement obtenu en ajoutant des agents chimiques de démoussage à la mousse, ce qui modifie la composition de telle manière que, après séparation des déblais, il est impossible de redonner au liquide la forme d'une mousse susceptible d'être utilisée pour une opération de forage ultérieure. La demande de brevet internationale WO-A-94/17 154 propose de fournir un fluide de forage sous forme de mousse réversible en utilisant une combinaison d'un tensioactif amphotère et soit d'un tensioactif anionique tel qu'un alkyl-sulfate ou un sulfate d'alkyl-éther, soit d'un tensioactif cationique afin de générer une mousse aqueuse sensible au pH. Pour la combinaison amphotère/anionique, la mousse est stable à un pH alcalin (> 9,5) et peut être détruite à un pH acide (< 4), et pour la combinaison amphotère/cationique, la mousse est stable à un pH acide (< 4) et peut être détruite à un pH alcalin (> 9,5). Cette technique présente l'inconvénient de nécessiter la mise en oeuvre de deux types de tensioactifs, de nécessiter un changement important de pH pour passer d'un état moussant à un état non moussant, et elle produit une mousse relativement sensible à la présence d'hydrocarbures.

La présente invention concerne la production de fluides de forage sous forme de mousse par utilisation de tensioactifs anioniques particuliers, plus spécifiquement des esters phosphates d'hydrocarbyle aliphatique et plus particulièrement des mono-esters phosphates d'hydrocarbyle aliphatique, pour générer la mousse, en particulier de manière à permettre aisément et de manière répétée la production et la rupture de la mousse sous pH contrôlé. De plus, les mousses produites selon cette méthode et avec les formulations de l'invention présentent une bonne tolérance aux hydrocarbures.

La présente invention fournit ainsi une méthode de forage de puits comprenant l'évacuation des déblais de forage au moyen d'un fluide de forage sous forme de mousse aqueuse contenant un agent moussant constitué de ou comprenant au moins un mono-ester phosphate d'hydrocarbyle aliphatique.

La nature anionique du mono-ester phosphate d'hydrocarbyle aliphatique offre la possibilité de générer une mousse dans des conditions relativement moins acides ou alcalines et de la détruire dans des conditions plus acides. Ce mécanisme repose sur le fait que les groupes acides dans l'ester phosphate sont ionisés dans des conditions alcalines ou faiblement acides, ce qui contribue aux performances moussantes des esters, alors que dans des conditions plus acides, l'ionisation est au moins partiellement inversée, ce qui réduit la charge nette sur la molécule et la capacité moussante de l'ester phosphate. Pour des raisons qui n'ont pas encore été éclaircies, le changement dans les propriétés moussantes apparaît beaucoup plus nettement dans les mono-esters phosphates que dans les diesters, si bien qu'il est souhaitable d'utiliser des mono-esters et en pratique des produits à base d'ester présentant une forte teneur en mono-esters. On pense que le changement observé dans la charge nette peut modifier la solubilité de l'agent moussant, si bien que la forme moins chargée ou non chargée est en fait éliminée du système moussant du fait de la diminution de la solubilité. Quel que soit le mécanisme, cet effet peut être observé en particulier avec les agents moussants à forte teneur en mono-esters.

En général, le passage de l'état moussant à l'état non moussant peut s'effectuer sure un intervalle de pH relativement étroit, souvent égal ou inférieur à environ 1 unité de pH, généralement du côté acide, typiquement entre 5 et 2,5, plus souvent entre 3 et 4,5. Le moussage est favorisé par des niveaux de pH supérieurs au niveau minimum requis, et il s'effectue généralement à un pH d'au moins 5, de préférence au moins 7,5, plus souvent au moins 8 et de préférence de 8 à 10, plus particulièrement d'environ 9. La rupture de la mousse est favorisée par des valeurs de pH inférieures à 4, plus souvent inférieures à environ 3, mais généralement pas inférieures à environ 2.

Ainsi, la présente invention propose une méthode de forage de puits comprenant les étapes suivantes :
- on évacue les déblais de forage par l'introduction dans le puits d'une mousse aqueuse formée à partir d'une solution aqueuse d'un agent moussant constitué de
ou comprenant au moins un mono-ester phosphate d'hydrocarbyle aliphatique, la phase aqueuse de la mousse ayant un pH d'au moins 5, et d'un gaz ;
- la mousse fait remonter les déblais de forage jusqu'au sommet du puits ;
- le pH de la mousse contenant les déblais est ramené à un pH acide auquel la mousse se détruit, généralement un pH inférieur à 4, pour former une suspension aqueuse de déblais de forage ; et
- les déblais sont ensuite séparés de la suspension, ce qui permet de retrouver une solution aqueuse d'agent moussant.

On peut réutiliser cette solution aqueuse d'agent moussant ainsi reformée pour former une mousse en augmentant d'abord son pH jusqu'à un niveau où l'agent moussant est à nouveau actif. Le volume de solution aqueuse reformée sera généralement inférieur au volume initial du fait de l'adsorption ou de l'absorption dans les déblais de forage, et la concentration de l'agent moussant peut être réduite par adsorption sur les déblais de forage. Des quantités complémentaires d'eau, d'agent moussant et, si nécessaire, d'autres composants du système sont habituellement ajoutées avant réutilisation.

Ainsi l'invention concerne aussi une méthode de forage de puits comprenant l'évacuation des déblais de forage, comprenant les étapes suivantes :
(i) on remonte les déblais de forage jusqu'au sommet du puits en introduisant dans le puits une mousse aqueuse formée à partir d'une solution aqueuse d'un agent moussant constitué de ou comprenant an moins un mono-ester phosphate d'hydrocarbyle aliphatique, la phase aqueuse de la mousse ayant un pH d'au moins 5, ainsi qu'un gaz, et la mousse aqueuse est ramenée jusqu'à la tête du puits ;
(ii) on ramène le pH de la mousse contenant les déblais de forage à un pH acide auquel la mousse se détruit, généralement un pH inférieur à 4, pour former une suspension aqueuse de déblais de forage ;
(iii) on sépare les déblais de forage de la suspension pour produire une solution aqueuse d'agent moussant reformée ; et
(iv) on recycle la solution aqueuse à l'étape (i), en ajoutant à la solution aqueuse d'agent moussant les quantités nécessaires d'ingrédients frais tels que de l'eau et/ou un agent moussant.

L'invention concerne également un fluide de forage sous forme d'une mousse aqueuse contenant un agent moussant, constitué de ou comprenant au moins un mono-ester phosphate d'hydrocarbyle aliphatique tel que, en particulier, un sel de potassium et/ou d'alcanolamine et/ou d'alkylalcanolamine, la mousse comprenant en outre un stabilisateur de mousse, de préférence tel que décrit ci-dessous, en particulier un tensioactif tel qu'un sulfate d'alkyl-éther, notamment un sel de potassium et/ou d'alcanolamine et/ou d'alkylalcanolamine.

L'invention inclut un fluide aqueux capable de mousser, comprenant un agent moussant constitué de ou comprenant au moins un mono-ester phosphate d'hydrocarbyle aliphatique tel que, en particulier, un sel de potassium et/ou d'alcanolamine et/ou d'alkylalcanolamine, et comprenant en outre un stabilisateur de mousse, de préférence tel que décrit ci-dessous, en particulier un tensioactif tel qu'un sulfate d'alkyl-éther, notamment un sel de potassium et/ou d'alcanolamine et/ou d'alkylalcanolamine, le fluide aqueux ayant un pH d'au moins 5, de préférence au moins 7, et plus spécifiquement au moins 8.

Le mono-ester phosphate d'hydrocarbyle aliphatique est de préférence un composé de formule (I) :

R¹O - (EO)ₙ - P(O)O₂ Hₓ Cat¹_{y} (I)

où :
- R¹ désigne un groupe hydrocarboné aliphatique ;
- EO un groupe éthylènoxy ;
- n est un nombre de 0 à 10 ;
- Cat¹ est un cation présentant une cationicité monovalente ;
- x est un nombre de 0 à 1 ;
- y est un nombre de 1 à 2 ; et
- x+y=2.

Il est important que l'agent moussant sous forme d'ester phosphate anionique ait une teneur élevée en mono-esters phosphates. Les principales impuretés rencontrées dans les produits à base de mono-esters phosphates sont généralement des diesters et, dans une moindre mesure, des triesters. Dans la présente application, les diesters présentent une efficacité moindre et peuvent même se révéler contre-productifs en ne contribuant que faiblement, voire pas du tout, au moussage dans une substance alcaline. Bien qu'ils puissent produire une mousse plus stable dans des conditions acides, cette mousse est néanmoins moins stable et présente des propriétés moins intéressantes que la mousse générée par des produits à forte teneur en mono-esters. En général, la teneur en mono-esters de l'agent moussant est au moins égale à 50 %, plus généralement au moins 75 %, de préférence au moins 80 % et typiquement au moins 90 %, par exemple de 88 à 93 % en poids. Des teneurs supérieures peuvent être envisagées, ce qui entraîne toutefois une augmentation sensible du coût de fabrication.

Le groupe hydrocarbyle, le groupe R¹ dans la formule (I), dans l'ester utilisé comme agent moussant dans la présente invention est de préférence un groupe hydrocarbyle en C₈ à C₁₈, plus généralement C₁₀ à C₁₆ et plus particulièrement C₁₂ à C₁₄; il s'agit en particulier d'un groupe alkyle ou alkényle. Il peut s'agir d'un groupe à chaîne droite, à chaîne ramifiée ou cycloaliphatique, mais on utilisera de préférence un groupe à chaîne droite, par exemple un groupe alkyle ou alkényle à chaîne droite. La présence de ramifications notamment en C₂ ou de ramifications plus longues, ou encore de groupes cycliques, peut avoir des effets contraires sur les propriétés moussantes du tensioactif et peut en outre le rendre moins aisément biodégradable, si bien qu'on leur préférera les groupes linéaires de poids moléculaire équivalent.

Le groupe hydrocarbyle, R¹ dans la formule (I), peut être lié directement au groupe phosphate, comme dans un ester phosphate d'hydrocarbyle, en particulier alkylé, ou lié par un groupe alkylènoxy, en particulier un groupe éthylènoxy. Ainsi, dans les agents moussants de formule (I), le groupe (EO)ₙ, avec EO et n tels que définis ci-avant, peut être inclus dans la molécule, mais sa présence n'est pas indispensable et les agents moussants pourront être fabriqués plus simplement avec n = 0, c'est-à-dire en l'absence de ce groupe. En présence d'une chaîne éthylènoxy, la valeur de n est de préférence comprise entre 1 et 5.

Les agents moussants utilisés dans la présente invention sont généralement inclus dans les fluides de forage sous forme de sels. De préférence, l'espèce formant le sel, correspondant à Cat¹ dans la formule (I), est un cation présentant une cationicité monovalente, ce qui signifie soit que le cation est monovalent, c'est-à-dire considéré comme un ion portant une seule charge positive, soit que le cation porte deux ou plusieurs charges positives simples. On peut citer, à titre d'exemples de cations monovalents appropriés, les cations des métaux alcalins, par exemple du sodium ou de préférence du potassium, de l'ammonium ou de préférence de l'onium aminé, en particulier des cations onium d'hydroxyalkylamines. Ces derniers se prêtent particulièrement bien à la présente invention, les principales sources appropriées pour de tels cations étant les alcanolamines, comme par exemple la diéthanolamine et la triéthanolamine, les alkylalcanolamines telles que l'alkyl- (par exemple méthyl- ou éthyl-) diéthanolamine et les propanolamines correspondantes. A titre d'exemples de cations portant deux ou plusieurs charges positives simples, on peut citer la classe des polyamines.

Dans la formule (I), les valeurs de x et y dépendent du degré de neutralisation formelle des groupes acides et, en fonction des espèces effectivement présentes dans le système aqueux, elles peuvent varier avec le pH du système aqueux. Du fait de cette variabilité, elles peuvent également être non-entières. En particulier lorsque le pH a été changé, le système peut comporter des formes « à base libre » du cation, notamment lorsque le cation est à base d'ammoniaque ou d'amine.

On peut citer, à titre d'exemples d'agents moussants à base d'esters phosphates particulièrement appropriés, les mono-esters phosphates (C_{10/14}-alkylés, plus particulièrement C_{12/13}-alkylés et notamment alkylés linéaires), en particulier les sels de potassium ou plus spécifiquement encore les sels de triéthanolamine.

La présente invention concerne ainsi une méthode de forage de puits comprenant l'évacuation des déblais de forage au moyen d'un fluide de forage à base de mousse aqueuse comprenant un agent moussant constitué de ou comprenant au moins un mono-ester phosphate d'hydrocarbyle aliphatique, de préférence un agent moussant à base d'un mono-ester phosphate alkylé (de C₁₀ à C₁₆, en particulier de C₁₂ à C₁₄) présentant une teneur en mono-ester au moins égale à 75 %, de préférence au moins 80 % en poids, en particulier sous forme de sel de potassium et/ou d'alcanolamine et/ou d'alkylalcanolamine. L'avantage de tels agents moussants à base d'esters phosphates réside dans le fait qu'ils présentent une bonne biodégradabilité et une faible toxicité aquatique, si bien qu'ils se prêtent particulièrement bien aux opérations de forage dans des environnements aquatiques et notamment marins.

Un fluide de forage à base de mono-esters phosphates d'hydrocarbyle tels que décrits ci-avant peut produire de bonnes mousses pouvant comporter des modificateurs de rhéologie qui leur confèrent une bonne capacité d'entraînement des déblais et une bonne tolérance aux hydrocarbures. Elles présentent en outre une stabilité raisonnable en présence d'électrolytes simples, comme par exemple le chlorure de sodium, habituellement présents dans les fluides de forage, soit tels quels soit sous forme de sels provenant des formations rocheuses forées. Ces mousses simples sont toutefois sensibles à la présence d'électrolytes porteurs de charges multiples, notamment le Ca²⁺ et le Mg²⁺, tels que ceux qui se trouvent dans l'eau dure. On peut améliorer sensiblement la stabilité des mousses en contact avec de l'eau ou constituées à partir d'eau contenant de telles espèces d'électrolytes porteurs de charges multiples en incorporant un stabilisateur à la mousse aqueuse. Le stabilisateur de mousse peut être un tensioactif à base de sulfate alkylé (sulfate d'alcool), un tensioactif au sulfate d'alkyl-éther, un phosphate d'alkyl-éther, soluble dans l'eau dans les conditions opératoires de pH, des dérivés alcanolamides d'acides gras ou un oxyde d'amine.

Les stabilisateurs de mousse à base de sulfate d'alkyl-éther les plus avantageux sont ceux répondant à la formule (11) :

R² - (OCH₂ - CH₂)ₘ₁ - OSO₃ Cat² (II)

où:
- R² désigne un groupe alkyle de C₈ à C₁₆, plus généralement de C₁₀ à C₁₄ et notamment en C₁₂ ;
- m1 est un nombre de 1 à 10, plus généralement de 2 à 5 (et peut être non-entier), ; et
- Cat² est un cation de cationicité monovalente.

Dans ces stabilisateurs, le cation Cat² présente une cationicité monovalente telle que définie plus haut. De préférence, Cat² est un cation monovalent tel qu'un métal alcalin, par exemple le sodium ou de préférence le potassium, l'ammonium ou, de préférence, un onium d'amine, en particulier des cations onium d'hydroxyalkylamine . Ces derniers se prêtent particulièrement bien à la présente invention, les principales sources appropriées pour de tels cations comprenant les alcanolamines, comme la diéthanolamine et la triéthanolamine, les alkylalcanolamines comme l'alkyl- (méthyl- ou éthyl- par exemple) diéthanolamine et les propanolamines correspondantes. Le cation Cat² peut être un mélange de différentes espèces cationiques. Le cation Cat² peut varier avec le pH, il peut dans certains cas être ou comprendre H⁺ (formant ainsi l'acide sulfonique).

Les sulfates de C_{10/16}-alkyl- (notamment lauryl-) 2 à 5 (notamment 3)-éthoxy, de préférence sous la forme de sels de diéthanolamine ou de triéthanolamine, constituent des tensioactifs à base de sulfate d'alkyl-éther particulièrement appropriés.

Les sulfates d'alcool appropriés peuvent présenter une structure similaire à celle des composés de formule (II), hormis les groupes éthylènoxy ; il peut s'agir en particulier des sulfates d'alcool C₁₀ à C₁₆ et notamment C₁₂ à C₁₄, typiquement sous la forme de sels comprenant des cations monovalents tels que des cations de métaux alcalins ou des amines, en particulier le potassium, et de préférence la diéthanolamine ou la triéthanolamine.

Les stabilisateurs de mousse à base d'ester phosphate d'alkyl-éther solubles dans l'eau peuvent répondre à la formule (III) :

[R³O - (AO)ₙ₁]ₘ₂ - P(O)(O Cat³)ₖ (III)

où :
- R³ est un groupe hydrocarboné aliphatique ;
- AO est un groupe alkylènoxy, en particulier un groupe éthylènoxy ;
- n1 est un nombre de 10 à 25 (et peut être non-entier) ;
- m2 est un nombre de 1 à 2 (et peut être non-entier) ;
- k est un nombre de 1 à 2, avec k + m2 = 3 ; et
- Cat³ est un cation présentant une cationicité monovalente.

Dans la formule (III), R³ est un groupe hydrocarbyle aliphatique, de préférence tel que décrit ci-dessus pour le groupe R¹ de la formule (I). La chaîne alkylènooxy contribue à la solubilité aqueuse de ces stabilisateurs de mousse si bien que AO sera de préférence entièrement éthylènoxy, mais peut également être un mélange de groupes éthylènoxy et propylènoxy, en particulier avec un rapport molaire éthylènoxy/propylènoxy d'au moins 1:1, de préférence d'au moins 3:1. L'ester d'éther de phosphate peut être un mono-ester ou un diester, mais il sera essentiellement au moins constitué de préférence d'un mono-ester. Cat³ est de préférence un cation tel que défini pour Cat¹ dans la formule (I).

Les stabilisateurs de mousse constitués de dérivés alcanolamides d'acide gras répondent typiquement à la formule (IV) :

R⁴ - CONH - (AO)ₘ₁.H (IV)

où :
- R⁴ est un hydrocarbyle de C₈ à C₂₂ ;
- AO représente un alkylènoxy ; et
- m1 est un nombre de 2 à 10 (et peut être non-entier).

Le groupe R⁴ peut être un groupe à chaîne droite ou ramifiée, saturé ou insaturé ; il s'agira de préférence d'un groupe alkyle ou alkényle de C₈ à C₂₂, en particulier de C₁₀ à C₂₀. Le groupe alkylènoxy (AO) est de préférence un groupe éthylènoxy, propylènoxy ou de préférence une combinaison d'éthylènoxy et de propylènoxy, notamment avec le groupe AO adjacent à l'atome d'azote se présentant sous la forme d'éthylènoxy, les autres groupes situés plus loin dans la chaîne étant constitués de propylènoxy. De préférence, lorsque le groupe AO est une combinaison d'éthylènoxy et de propylènoxy telle que décrite ci-avant, m est choisi suffisamment grand (généralement juste assez grand) pour que le produit soit liquide à la température ambiante.

Les oxydes d'amines utilisés comme stabilisateurs de mousse sont typiquement des oxydes de C₈ à C₁₈ alkyl- di-(C₁ à C₄ alkyl- inférieur, généralement méthyl-) amines.

Lorsqu'ils sont utilisés seuls, ces stabilisateurs de mousse ne constituent généralement pas de très bons agents moussants et ne se prêtent pas particulièrement au passage d'un état moussant à un état non-moussant. L'avantage qu'offre leur utilisation dans les formulations mises en oeuvre dans la présente invention réside dans le fait qu'ils apportent une tolérance accrue aux espèces telles que les Ca²⁺ et/ou Mg²⁺ et qu'ils améliorent les propriétés de remoussage du tensioactif.

La présente invention concerne ainsi une méthode de forage de puits comprenant l'évacuation des déblais de forage au moyen d'un fluide de forage tel qu'une mousse aqueuse comprenant un agent moussant constitué de ou comprenant au moins un mono-ester phosphate d'hydrocarbyle aliphatique, de préférence un agent moussant à base de mono-ester phosphate alkylé (C₁₀ à C₁₆, notamment C₁₂ à C₁₄) présentant une teneur en mono-ester d'au moins 75 % en poids, en particulier sous la forme de sel de potassium et/ou d'alcanolamine et/ou d'alkylalcanolamine, la mousse comprenant en outre au moins un tensioactif à base de sulfate d'alkyl-éther, en particulier sous la forme de sel de potassium et/ou d'alcanolamine et/ou d'alkylalcanolamine.

Comme décrit ci-dessus, l'agent moussant et le stabilisateur de mousse se présentent de préférence sous la forme d'alcanolamines. S'ils ne sont pas aisément disponibles sous cette forme, il est possible de les former *in situ* dans une solution moussante en ajoutant une alcanolamine correspondante à la forme d'acide libre ou un autre sel de l'agent moussant et/ou du stabilisateur de mousse. Dans ce cas, il peut être nécessaire de procéder à un ajustement mineur du pH.

La tolérance de la mousse aux ions métalliques polyvalents tels que, par exemple, le calcium et/ou le magnésium, présents dans l'eau dure utilisée pour constituer la mousse, ou dissous dans la phase aqueuse lors du forage de formations rocheuses calcaires, peut encore être améliorée de manière significative en ajoutant un agent chélatant au fluide aqueux utilisé pour former la mousse. Cet agent chélatant sera de préférence de l'acide éthylènediamine-tétraacétique (EDTA).

L'EDTA est généralement ajouté au système sous la forme d'un sel, de préférence de base monovalente, par exemple un sel de métal alcalin ou d'ammonium ou d'amine, y compris les oniums d'amines, de préférence tel que le sel de tétrasodium. La quantité d'agent chélatant, notamment l'EDTA, contenu dans le fluide aqueux utilisé pour constituer la mousse dépendra en général de la concentration du calcium et/ou du magnésium présents dans le fluide, provenant par exemple des précédents cycles de forage à la mousse. De préférence, la concentration de l'agent chélatant, l'EDTA par exemple, est d'au moins 1:1 molaire, sur la base de la concentration combinée de calcium et de magnésium dans le fluide aqueux. La concentration prévue pour de telles espèces, provenant soit d'un appoint d'eau, soit des formations rocheuses traversées en cours de forage, est typiquement estimée entre 0 et 20, plus généralement entre 1 et 15 g.l⁻¹ d'EDTA.

La présente invention concerne ainsi une méthode de forage de puits comprenant l'évacuation des déblais de forage au moyen d'un fluide de forage tel qu'une mousse aqueuse comprenant un agent moussant constitué de ou comprenant au moins un mono-ester phosphate d'hydrocarbyle aliphatique, de préférence un agent moussant à base de mono-ester phosphate alkylé (C₁₀ à C₁₆, notamment C₁₂ à C₁₄) présentant une teneur en mono-ester d'au moins 75 % en poids, en particulier sous la forme de sel de potassium et/ou d'alcanolamine et/ou d'alkylalcanolamine, la mousse comprenant en outre au moins un tensioactif à base de sulfate d'alkyl-éther, en particulier sous la forme de sel de potassium et/ou d'alcanolamine et/ou d'alkylalcanolamine.

Le fluide de forage peut également comprendre d'autres composants :
- un solvant, tel que le glycérol, le dipropylène glycol ou des polyosides liquides à une concentration d'environ 0,2 à environ 5 % en poids du fluide de forage ;
- des modificateurs de rhéologie, typiquement des substances polymériques telles que le xanthane ou des gommes similaires, ou des polymères, utilisés à des taux de environ 0,01 à environ 0,5 % en poids (100 à 500 ppm) du fluide de forage ;
- des inhibiteurs d'argile destinés à inhiber le gonflement des argiles au contact de l'eau. Ces inhibiteurs peuvent être des résines de carbapol ou des éthers alkylés, notamment butyliques, tels que le butanol éthoxylé commercialisé par Uniqema sous le nom de Kemelix 7423X et le butanol mixte éthoxylé/propoxylé commercialisé par Uniqema sous le nom de Kemelix UG20WAN, typiquement utilisés dans des proportions comprises entre environ 0,1 et environ 10 %, plus souvent entre 0,5 et 5 % en poids du fluide de forage ;
- des lubrifiants ou des additifs d'onctuosité tels que des phosphates/phosphites d'amines, des savons d'amines ou des polyéthylène glycols utilisés dans des proportions de 0 à 10 %, généralement de 2 à 3 % en poids du fluide de forage ; et
- des inhibiteurs d'hydrates de gaz, notamment lors d'opérations de forage à basse température, tels que la polyvinyl-pyrrolidone et des polymères similaires, de sel d'ammonium quaternaire ou des protéines de poisson antigel, typiquement utilisés dans des proportions de 0 à 20 %, généralement de 2 à 5 % en poids du fluide de forage.

La composition globale du fluide de forage se situera typiquement dans les intervalles suivants :

| | intervalle (parties en poids) | | |
|---|---|---|---|
| matériau | large | souhaitable | préférable |
| ester phosphate | 1 à 3 | 1 à 2 | 1,5 à 2 |
| stabilisateur | 0,01 à 0,1 | 0,02 à 0,08 | 0,03 à 0,06 |
| agent chélatant | 0,05 à 2 | 0,1 à 1,5 | 0,75 à 1,25 |
| sel (en général NaCl) | 0,01 à 0,1 | 0,02 à 0,08 | 0,03 à 0,06 |
| eau* | jusqu'à 100 | jusqu'à 100 | jusqu'à 100 |

| | | | |
|---|---|---|---|
| * en tenant compte des autres additifs. | | | |

On prépare en général la mousse en utilisant pour la phase gazeuse de l'air ou de l'azote pour une densité de mousse de 20 à 500, en particulier de 50 à 250 et plus généralement d'environ 100 kg.m³.

Lors d'opérations de forage de puits utilisant le recyclage mis en oeuvre dans la présente invention, le pH de la mousse et/ou des substances moussantes est modifié afin de permettre la formation d'une mousse stable ou de déstabiliser une mousse. L'intervalle au sein duquel le pH sera modifié est généralement aussi restreint que possible afin de limiter les ajouts d'acide et de base respectivement nécessaires pour réduire et augmenter le pH au cours du procédé. La stabilité de la mousse une fois introduite dans le puits de forage est bien entendu importante et il est normal de vérifier à la tête de puits, avant que la mousse soit prête et pompée dans le puits, que le pH des matériaux entrant dans la composition de la mousse soit suffisamment alcalin pour que le contact avec les formations rocheuses à travers lesquelles le puits est foré ne réduise pas le pH à un niveau tel que la mousse soit déstabilisée avant son retour à la tête de puits. Ceci étant pris en compte, le pH alcalin des matériaux moussants sera généralement au moins égal à 7, voire supérieur, environ 8 par exemple, mais il ne sera généralement pas supérieur à environ 10 et de préférence pas supérieur à environ 9.

Les mousses mises en oeuvre dans la présente invention présentent une stabilité raisonnable à la température, mais, comme toutes les mousses aqueuses, leur stabilité décroît avec l'augmentation de la température. Cette baisse de stabilité est généralement attribuée à la réduction de la viscosité de la phase liquide, qui décroît avec l'augmentation de la température. Typiquement, dans le cas des mousses aqueuses, la stabilité de la mousse mesurée à demi-vie chute d'un facteur de 5 lorsque la température passe de 25 °C à 90 °C.

Les matériaux mis en oeuvre pour modifier le pH afin de rendre la mousse acide en vue de la déstabiliser et de la rendre alcaline afin qu'elle puisse remousser sont de préférence, respectivement, un acide fort et une base forte. Ceci réduit le risque de tamponnage inopiné du système. Typiquement, l'acide utilisé sera de l'acide chlorhydrique car il est peu coûteux, facilement disponible et forme des sels de chlorure lors de la neutralisation. Parmi les autres acides minéraux forts couramment utilisés, on peut citer les acides halohydriques, qui sont relativement coûteux ; les acides sulfurique et phosphoriques pourraient être utilisés, ce qui n'est toutefois pas vraiment souhaitable à cause du risque de précipitation de sels insolubles et de la tendance à tamponner le milieu aqueux (ce qui rend les modifications de pH plus difficiles à gérer) ; et les propriétés oxydantes de l'acide nitrique le rendent indésirable pour une mise en oeuvre dans un tel environnement, relativement riche en combustible. La base forte sera de préférence un hydroxyde de métal alcalin, en particulier de l'hydroxyde de sodium, bien que l'hydroxyde de potassium puisse également être utilisé en dépit de son coût plus élevé.

L'invention est illustrée par les exemples suivants. Tous les pourcentages et parties sont exprimés en poids sauf mention contraire.

### Constituants

**Agents moussants :**

| Code | Description |
|---|---|
| FA1 | ester phosphate alkylé C₉/C₁₅ (forme acide) : environ 70 % de mono-ester et environ 8 % de diester, ex. Uniqema |
| FA2 | ester phosphate (EO)₅ alkylé C₈/C₁₀ (forme acide) : environ 56 % de mono-ester et environ 38 % de diester, ex. Uniqema |
| FA3 | ester phosphate (EO)₅ alkylé C₁₀ (forme acide) : environ 72 % de mono-ester et environ 10 % de diester, ex. Uniqema |
| FA4 | ester phosphate alkylé C₁₂/C₁₃ (forme K) : environ 75 % de mono-ester et environ 8 % de diester, ex. Uniqema |
| FA5 | ester phosphate alkylé C₁₂/C₁₃ (forme triéthanolamine) : environ 75 % de mono-ester et environ 8 % de diester, ex. Uniqema |
| CFA1 ADS | agent moussant du commerce, ex. Air Drilling Services |

**Stabilisateurs**

| Code | Description |
|---|---|
| S1 | sulfate (3EO) de lauryle de cocoamido-diéthanolamine (sel de DEA), ex. Uniqema (lauryléthoxysulfate) |

**Autres constituants :**

| Code | Description |
|---|---|
| Huile 1 | huile minérale Soltrol, ex. Phillips Chemicals : Visc (20°C) 20 mPa.s ; 0,9 % en vol. d'aromatiques |
| Huile 2 | huile minérale Marcol, ex. Esso : Visc (20°C) 10 mPa.s ; 0 % d'aromatiques |
| Huile 3 | huile brute à forte teneur en aromatiques : Vise (20°C) 318 mPa.s ; 56 % en vol. d'aromatiques |
| Huile 4 | huile brute à teneur moyenne en aromatiques : Vise (20°C) 8 mPa.s ; 38 % en vol. d'aromatiques |
| Cell 1 | polymère de cellulose polyanionique Aquapac, ex. Aqualon |
| Sol 1 | argile de charge (pour simuler les déblais de forage) HiModPrima, ex. Dowell |

**Composition des saumures**

| Saumure | Composition (concentration millimolaire) | | | | | | |
|---|---|---|---|---|---|---|---|
| | CaCl₂ | NaCl | KCl | MgSO₄ | NaHCO₃ | Na₂SO₄ | MgCl₂ |
| A | 10,8 | 478 | 17,4 | 29,2 | - | - | 23,6 |
| B | 11,8 | 405 | 11,8 | - | 23,8 | 28,4 | - |

Les saumures sont des solutions destinées à simuler l'utilisation d'eau de mer lors de la fabrication des fluides de forage.

### Méthodes d'essai

### Stabilité des mousses (durée de vie)

On constitue une solution d'agent moussant en ajoutant une quantité d'agent moussant à 200 ml d'un milieu aqueux (eau distillée contenant différentes quantités de chlorure de sodium) dans un récipient gradué de 3 litres. Le pH de cette solution a été ajusté à une valeur prédéterminée, avec la quantité requise d'hydroxyde de sodium concentré ou d'acide chlorhydrique, et la solution a été brassée dans un mélangeur de type Janke et Kunkel à 2000 t/mn (environ 33 Hz) pendant 2 minutes.

Le volume de mousse obtenu (FV) a été noté en 1 et la mousse a été transférée dans un récipient conique gradué de 3 litres. En fin de transfert de la mousse on a déclenché un chronomètre pour enregistrer, sous la dénomination de « demi-vie » (HL) de la mousse, le temps en minutes requis pour que le liquide de drainage atteigne 100 ml. Le taux de drainage (DR) en ml par minute a également été enregistré. Tous les essais ont été réalisés à température ambiante, sauf mention contraire.

### La rhéologie de la mousse :

Elle a été étudiée sur une mousse obtenue comme décrit ci-dessus, mais avec 50 ml de solution moussante. La mousse a été testée au moyen d'un rhéomètre Haake RT20 en utilisant une géométrie de plaques cannelées de 35 mm avec un intervalle de 2 mm entre plaques. Une contrainte de cisaillement constante a été appliquée pendant 600 secondes et on a mesuré le taux de cisaillement. Pour chaque contrainte de cisaillement, on a noté le taux de cisaillement après 500 secondes (une valeur constante étant atteinte), et la contrainte de cisaillement (SS en Pa) a été relevée en fonction du taux de cisaillement (SR en sec⁻¹).

### La perte de fluide :

On a mesuré le filtrat au moyen d'une méthode et d'un appareil API (American Petroleum Institute) standards par filtration statique dans une cellule haute pression haute température (HPHT) en utilisant un papier filtre de 50 mm, à une pression de 7 bars (environ 0,7 MPa), sous azote et à une température de 25 °C. Le volume de filtrat a été relevé en fonction du temps pendant 30 minutes. Les résultats sont exprimés en volume de filtrat (FLFV) en ml et le temps requis pour atteindre le volume de filtrat considéré est exprimé sous la forme de racine carrée du temps en minutes FLT^{1/2}.

### Exemple 1

Des échantillons d'agents moussants ont été testés à différentes concentrations en présence de différentes concentrations de chlorure de sodium et à différents pH (de la solution susceptible de mousser). Les formulations et les résultats d'évaluation des mousses générées sont présentés dans le Tableau 1 ci-dessous :

**Tableau 1**

| Ex. n° | Agent moussant | | NaCl | pH | FV (l) | HL (min) | DR (ml.min⁻¹) |
|---|---|---|---|---|---|---|---|
| | Type | % poids | (mol,l⁻¹) | | | | |
| 1.1 | FA1 | 2 | 0,01 | 9 | 1,9 | 16 | 7,7 |
| 1.2 | FA1 | 2 | 0,1 | 9 | 2,0 | 28 | 2,5 |
| 1.3 | FA1 | 2 | 1 | 9 | 2,2 | 95 | 1,0 |
| 1.4 | FA2 | 1 | 0,01 | 9 | 2,0 | - | 17 |
| 1.5 | FA2 | 1 | 0,01 | 3 | 1,75 | - | 15 |
| 1.6 | FA3 | 2 | 0,01 | 9 | 1,75 | - | 22,5 |
| 1.7 | FA3 | 2 | 0,01 | 3 | 2,00 | - | 17,5 |
| 1.8 | FA1 | 2 | 0,01 | 9 | 1,9 | 16 | 7,7 |
| 1.9 | FA1 | 2 | 0,01 | 3 | 1,75 | 13 | 10,1 |
| 1.10 | FA1 | 2 | 0,1 | 9 | 2,0 | 28 | 2,5 |
| 1.11 | FA1 | 2 | 0,1 | 3 | 1,6 | 12 | 10,8 |
| 1.12 | FA1 | 2 | 1 | 9 | 2,2 | 95 | 1,0 |
| 1.13 | FA1 | 2 | 1 | 3 | 2,2 | 140 | 0,7 |

Ces résultats montrent que l'augmentation de la concentration en chlorure de sodium entraîne une augmentation de la stabilité de la mousse. Cependant, certaines de ces mousses ne présentent pas de variation en fonction du pH, bien que les mousses produites avec l'agent moussant FA1 présentent une certaine dépendance vis-à-vis du pH, qu'elles perdent toutefois avec une salinité supérieure.

### Exemple 2

Les mousses ont été obtenues avec un agent moussant FA4 ou FA5 à partir de solutions de tensioactifs à différentes concentrations en chlorure de sodium, le pH de la solution ayant été ajusté à 9 ou 3 avant le moussage. Les résultats en termes de taux de drainage sont présentés dans le Tableau 2 ci-dessous. Il est à noter que ces mousses présentent une forte dépendance vis-à-vis du pH.

**Tableau 2**

| Ex. n° | Agent moussant | | pH | NaCl | DR |
|---|---|---|---|---|---|
| | Type | % poids | | (mol.l⁻¹) | (ml.min⁻¹) |
| 2.1.1 | FA3 | 2 | 9 | 0,01 | 10 |
| 2.1.2 | FA3 | 2 | 3 | 0,01 | N/A* |
| 2.2.1 | FA3 | 2 | 9 | 0,5 | 4,6 |
| 2.2.2 | FA3 | 2 | 3 | 0,5 | N/A* |
| 2.3.1 | FA3 | 2 | 9 | 1 | 5,5 |
| 2.3.2 | FA3 | 2 | 3 | 1 | N/A* |
| 2.4.1 | FA4 | 2 | 9 | 0,01 | 11 |
| 2.4.2 | FA4 | 2 | 3 | 0,01 | N/A* |
| 2.5.1 | FA4 | 2 | 9 | 0,5 | 5,5 |
| 2.5.2 | FA4 | 2 | 3 | 0,5 | N/A* |
| 2.6.1 | FA4 | 2 | 9 | 1 | 4,5 |
| 2.6.2 | FA4 | 2 | 3 | 1 | N/A* |

| | | | | | |
|---|---|---|---|---|---|
| * Le DR n'a pas pu être mesuré car, à un pH de 3, la solution n'a pas formé de mousse. | | | | | |

### Exemple 3

On a évalué l'effet de différents électrolytes sur des mousses obtenues avec l'agent moussant FA1. Les électrolytes étaient incorporés à la solution utilisée pour fabriquer les mousses. Les formulations et les résultats sont présentés dans le Tableau 3 ci-après.

**Tableau 3**

| Ex. n° | Agent moussant | | Electrolyte | | pH | FV | HL | DR |
|---|---|---|---|---|---|---|---|---|
| | Type | % poids | Type | mol.l⁻¹ | | (l) | (min) | (ml.min⁻¹) |
| 3.1.1 | FA1 | 2 | NaCl | 0,01 | 9 | 1,9 | 16 | 7,7 |
| 3.1.2 | FA1 | 2 | NaCl | 0,5 | 9 | 2,2 | 84 | 0,8 |
| 3.1.3 | FA1 | 2 | NaCl | 1 | 9 | 2,2 | 95 | 1,0 |
| 3.2.1 | FA1 | 2 | CaCl₂ | 0,01 | 9 | 1,7 | 16,5 | 6,5 |
| 3.2.2 | FA1 | 2 | CaCl₂ | 0,02 | 9 | - | N/A | N/A |
| 3.2.3 | FA1 | 2 | CaCl₂ | 0,05 | 9 | - | N/A | N/A |
| 3.2.4 | FA1 | 2 | CaCl₂ | 0,5 | 9 | - | N/A | N/A |
| 3.3 | FA1 | 2 | KCI | 0,5 | 9 | 2,0 | 6 | 20,1 |
| 3.4 | FA1 | 2 | LiCl | 0,5 | 9 | - | N/A | N/A |

### Exemple 4

On a évalué l'effet de la contamination des mousses en préparant des mousses selon la méthode décrite ci-avant au moyen d'eau contenant du chlorure de sodium, puis en ajoutant à la mousse le contaminant d'essai, une solution aqueuse de chlorure de calcium
ou de l'eau de mer synthétique (saumure A) dans une proportion juste suffisante pour détruire la mousse. La quantité de contaminant nécessaire a été notée en g.l⁻¹ pour le CaCl₂ et en % poids pour l'eau de mer. Les formulations et les résultats sont présentés dans le Tableau 4 ci-après.

**Tableau 4**

| Ex. n° | Agent moussant | | NaCl | Contaminant | | pH |
|---|---|---|---|---|---|---|
| | Type | % poids | mol.l⁻¹ | Type | Quantité | |
| 4.1 | FA4 | 2 | 0,5 | CaCl₂ | 1 g.l⁻¹ | 9 |
| 4.2 | FA4 | 2 | 1 | CaCl₂ | 1 g.l⁻¹ | 9 |
| 4.3 | FA4 | 2 | 1 | Eau de mer | 1% | 9 |
| 4.4 | FA5 | 2 | 0,5 | CaCl₂ | 2 g.l⁻¹ | 9 |
| 4.5 | FA5 | 2 | 1 | CaCl₂ | 3 g.l⁻¹ | 9 |
| 4.6 | FA5 | 2 | 1 | Eau de mer | 1% | 9 |

### Exemple 5

On a évalué l'effet de la température sur la stabilité des mousses en préparant et en testant des mousses à des températures contrôlées. Les formulations et les résultats sont présentés dans le Tableau 5 ci-dessous.

**Tableau 5**

| Ex. n° | Agent moussant | | Electrolyte | | pH | Temp | HL | DR |
|---|---|---|---|---|---|---|---|---|
| | Type | % poids | Type | mol.l⁻¹ | | (°C) | (min) | (ml.min⁻¹) |
| 5.1 | FA5 | 2 | NaCl | 1 | 9 | 25 | 18 | 5 |
| 5.2 | FA5 | 2 | NaCl | 1 | 9 | 50 | 9 | 7 |
| 5.3 | FA5 | 2 | NaCl | 1 | 9 | 70 | 5 | 12 |
| 5.4 | FA5 | 2 | NaCl | 1 | 9 | 90 | 4 | 32 |

### Exemple 6

On a évalué l'effet de la contamination des mousses par des hydrocarbures en ajoutant différentes quantités d'huiles à la mousse préparée comme décrit ci-dessus ou à la solution utilisée pour préparer la mousse. Ces tests simulent l'effet de la contamination due à des hydrocarbures (huile) provenant d'une couche pétrolifère traversée au cours de l'opération de forage et les résultats des essais sont présentés dans le Tableau 6 ci-dessous.

**Tableau 6**

| Ex. n° | Agent moussant | | Electrolyte | | pH | Huile | | Effet |
|---|---|---|---|---|---|---|---|---|
| | Type | % poids | Type | mol.l⁻¹ | | Type | ml | |
| 6.1 | FA1 | 2 | NaCl | 1 | 9 | Huile 1 | 330 | Pas de rupture de mousse après contamination |
| 6.2 | FA4 | 2 | NaCl | 1 | 9 | Huile 2 | 500 | Pas de rupture de mousse après contamination |
| 6.3 | FA5 | 2 | NaCl | 1 | 9 | Huile 2 | 500 | Pas de rupture de mousse après contamination |
| 6.4 | FA5 | 2 | NaCl | 1 | 9 | Huile 2 | 100* | HL passe de 25 à 60 mn |
| 6.5 | FA4 | 2 | NaCl | 1 | 9 | Huile 2 | 100* | HL passe de 25 à 60 min |

| | | | | | | | | |
|---|---|---|---|---|---|---|---|---|
| * ajoutée avant moussage | | | | | | | | |

### Exemple 7

Cet exemple illustre l'effet de la mise en oeuvre d'un polymère cellulosique en vue de modifier la rhéologie de la mousse. Différentes quantités de Cell 1 ont été ajoutées à la solution utilisée pour préparer la mousse ; HL et DR ont été testés pour les mousses ainsi obtenues. L'ajout du polymère permet d'améliorer la stabilité de la mousse. Les formulations et les résultats des essais sont présentés dans le Tableau 7 ci-après.

**Tableau 7**

| Ex. n° | Agent moussant | | Electrolyte | | pH | Cell 1 | HL | DR |
|---|---|---|---|---|---|---|---|---|
| | Type | % poids | Type | mol.l⁻¹ | | (g) | (min) | (ml.min⁻¹) |
| 5.1.1 | FA5 | 2 | NaCl | 1 | 9 | 0 | 25 | 4,9 |
| 5.1.2 | FA5 | 2 | NaCl | 1 | 9 | 1 | 55 | 2,0 |
| 5.1.3 | FA5 | 2 | NaCl | 1 | 9 | 2 | 80 | 0,5 |
| 5.1.4 | FA5 | 2 | NaCl | 1 | 9 | 3 | 240 | 0,4 |
| 5.2.1 | FA4 | 2 | NaCl | 1 | 9 | 0 | 20 | 5,8 |
| 5.2.2 | FA4 | 2 | NaCl | 1 | 9 | 1 | 80 | 0,8 |

### Exemple 8

Cet exemple illustre la mise en oeuvre d'un stabilisateur destiné à améliorer la stabilité de la mousse lorsqu'elle est contaminée par du calcium (sous forme de chlorure) selon la méthode décrite ci-avant. Les formulations et les résultats obtenus sont présentés dans le Tableau 8 ci-dessous.

**Tableau 8**

| Ex. n° | Agent moussant | | Stabilisateur | | NaCl (mol.l⁻¹) | CaCl₂ (g.l⁻¹) | pH | FV (1) | Effet |
|---|---|---|---|---|---|---|---|---|---|
| | Type | % poids | Type | % poids | | | | | |
| 8.1.1 | FA4 | 2 | - | 0 | 1 | 1 | 9 | N/A | La mousse se détruit |
| 8.1.2 | FA4 | 1,7 | S1 | 0,3 | 1 | 1 | 9 | 1,0 | |
| 8.2.1 | FA5 | 2 | - | 0 | 1 | 3 | 9 | N/A | La mousse se détruit |
| 8.2.2 | FA5 | 1,7 | S1 | 0,3 | 1 | 3 | 9 | 0,9 | |

### Exemple 9

Ajout d'un agent chélatant en vue d'améliorer la stabilité de la mousse lorsqu'elle est contaminée par du calcium ou de l'eau de mer à un pH de 9. Les résultats sont présentés dans le Tableau 9.

**Tableau 9**

| Ex. n° | Agent moussant | | Stabilisateur | | NaCl (mol.l⁻¹) | EDTA (g.l⁻¹) | Quantité requise pour détruire la mousse | | |
|---|---|---|---|---|---|---|---|---|---|
| | Type | % poids | Type | % poids | | | CaCl₂ (g.l⁻¹) | Saumure A (ml.l⁻¹) | Saumure B (ml.l⁻¹) |
| 9.1 | FA5 | 1,95 | S1 | 0,05 | 1 | 3,16 | 2,4 | 320 | 1850 |
| 9.2 | FA5 | 1,95 | S1 | 0,05 | 1 | 6,32 | 3,8 | 450 | -- |

### Exemple 10

La compatibilité des mousses avec les modificateurs de rhéologie et les déblais de forage a été évaluée dans cet exemple. Les formulations mises en oeuvre et les propriétés mesurées sont présentées dans le Tableau 10 ci-dessous.

**Tableau 10**

| Ex. n° | Agent moussant | | NaCl | Cell 1 | Sol 1 | pH | HL | DR |
|---|---|---|---|---|---|---|---|---|
| | Type | % poids | (mol.l⁻¹) | (g.l⁻¹) | (g.l⁻¹) | | (min) | (ml.min⁻¹) |
| 10.1.1 | FA5 | 2 | 1 3 | | - | 9 | 238 | 0,42 |
| 10.1.2 | FA5 | 2 | 1 | 3 | 28,5 | 9 | 216 | 0,64 |
| 10.2.1 | FA4 | 2 | 1 | 3 | - | 9 | 93 | 0,76 |
| 10.2.2 | FA4 | 2 | 1 | 3 | 28,5 | 9 | 4 | 26,33 |

L'ajout ultérieur de sable n'a pas eu d'effet sur la stabilité de ces mousses.

### Exemple 11

Les propriétés de filtration des mousses ont été testées en vue d'évaluer la tendance des fluides à s'écouler dans les strates poreuses environnantes dans le cas où la pression au sein des fluides venait à dépasser celle de la formation rocheuse (conditions de « surpression » accidentelle). Les formulations testées et les résultats d'essai sont présentés dans le Tableau 11 ci-après.

**Tableau 11**

| Ex. n° | Agent moussant | | NaCl | Cell 1 | Sol 1 | pH | FLFV | FLT^{1/2} |
|---|---|---|---|---|---|---|---|---|
| | Type | % poids | (mol.l⁻¹) | (g.l⁻¹) | (g.l⁻¹) | | (ml) | |
| 11.1.1 | FA5 | 2 | 1 | 3 | 5 | 9 | 9 | 2,5 |
| 11.1.2 | | | | | | | 12 | 3,75 |
| 11.1.3 | | | | | | | 14 | 5 |
| 11.2.1 | FA5 | 2 | 1 | 3 | 28,5 | 9 | 2 | 2,5 |
| 11.2.2 | | | | | | | 4 | 3,75 |
| 11.2.3 | | | | | | | 6 | 5 |

### Exemple 12

Les propriétés rhéologiques des différentes mousses ont été mesurées au moyen de la méthode décrite ci-avant. Les matériaux testés et les résultats obtenus sont présentés dans le Tableau 12 ci-dessous.

**Tableau 12**

| Ex. n° | Agent moussant | SS (Pa) | SR (sec⁻¹) |
|---|---|---|---|
| 12.1.1 | FA4 | 65 | 20 |
| 12.1.2 | | 72 | 50 |
| 12.1.3 | | 82 | 100 |
| 12.1.4 | | 82 | 120 |
| 12.2.1 | FA5 | 49 | 20 |
| 12.2.2 | | . 68 | 50 |
| 12.2.3 | | 78 | 100 |
| 12.2.4 | | 79 | 120 |
| C12.1.1 | ADS | 55 | 20 |
| C12.1.2 | | 70 | 50 |
| C12.1.3 | | 79 | 100 |
| C12.1.4 | | 83 | 120 |

### Exemple 13

Cet exemple simule l'utilisation d'une solution moussante au travers d'une série de cycles de moussage/rupture/remoussage et étudie les propriétés des mousses après un certain nombre de cycles. La mousse a été préparée comme décrit ci-avant à un pH de 9, détruite en ajustant le pH à environ 1 au moyen d'une solution de HCl concentrée, et ramenée à un pH de 9 en vue du remoussage au moyen d'une solution de NaOH. La composition de la formulation et les propriétés sont présentées dans le Tableau 13 ci-dessous.

**Tableau 13**

| Ex. n° | Agent moussant | | NaCl | Cycle n° | DR | HL |
|---|---|---|---|---|---|---|
| | Type | % poids | (mol.l⁻¹) | | (ml.min⁻¹) | (min) |
| 13.1 | FA5 | 2 | 1 | 1 | 0,5 | 260 |
| 13.2 | FA5 | 2 | 1 | 2 | 0,65 | 190 |
| 13.3 | FA5 | 2 | 1 | 3 | 0,69 | 180 |
| 13.4 | FA5 | 2 | 1 | 4 | 0,85 | 160 |

### Exemple 14

On a évalué dans cet exemple l'effet des agents chélatants/séquestrants sur les propriétés des mousses en présence d'ions Ca. On a préparé une mousse en dissolvant tout d'abord 2 % en poids de tensioactif (agent moussant + stabilisateur) et 11,7 g de NaCl (pour avoir une concentration molaire de 1) dans 200 ml d'eau distillée, le pH étant ajusté à 9 avec une solution de NaOH concentrée, puis en mettant en oeuvre 100 ml de la solution d'essai pour générer une mousse dans une éprouvette graduée au moyen d'un mélangeur Waring utilisé pendant 1 minute à faible vitesse. On a mesuré la hauteur maximale de mousse et la demi-vie de la mousse. On a répété l'opération de moussage en utilisant une solution à laquelle on avait ajouté 1,2 g.l⁻¹ de CaCl₂ (sous la forme de 2,4 g.l⁻¹ de CaCl₂.6H₂O) et des quantités variables d'agent séquestrant. En cas de besoin, le pH a été ajusté à 9 pour l'opération de moussage, au moyen d'une solution de NaOH concentrée. On a évalué pour certaines mousses l'effet de la rupture de la mousse par acidification comme décrit dans l'Exemple 13, le pH étant ensuite ajusté à 9 et on a évalué le remoussage ; les résultats sont exprimés en % en volume de la mousse reformée (Re-FV %). Les formulations et les résultats d'essai sont présentés dans le Tableau 14 ci-dessous.

**Tableau 14**

| Ex. n° | Agent moussant | | Stabilisateur | | CaCl₂ (g.l⁻¹) | EDTA (g/l⁻¹) | Ca/ EDTA | FH (cm) | HL (min) | Re-FV (%) |
|---|---|---|---|---|---|---|---|---|---|---|
| | Type | % poids | Type | % poids | | | | | | |
| 14.1.1 | FA5 | 2 | S1 | 0 | 0 | 0 | - | 16,2 | 10,42 | - |
| 14.1.2 | | 1,90 | | 0,1 | | | | 12,6 | 7,1 | - |
| 14.1.3 | | 1,80 | | 0,2 | | | | 13 | 4,95 | - |
| 14.1.4 | | 1,50 | | 0,5 | | | | 8,7 | 1,9 | - |
| 14.1.5 | | 0 | | 2 | | | | 4,9 | 0,75 | - |
| 14.2.1 | FA5 | 2 | S1 | 0 | 1,2 | - | - | 0 | 0 | - |
| 14.2.2 | | 1,90 | | 0,1 | | | | 0 | 0 | - |
| 14.2.3 | | 1,80 | | 0,2 | | | | 0 | 0 | - |
| 14.2.4 | | 1,50 | | 0,5 | | | | 0 | 0 | - |
| 14.2.5 | | 0 | | 2 | | | | 5 | 0,65 | - |
| 14.3.1 | FA5 | 2 | S1 | 0 | 1,2 | 3,18 | 1:1 | 9,75 | 4 | 60 |
| 14.3.2 | | 1,90 | | 0,1 | | | | 11,6 | 4,17 | 92 |
| 14.3.3 | | 1,80 | | 0,2 | | | | 9,4 | 3,93 | 72 |
| 14.3.4 | | 1,50 | | 0,5 | | | | 10,2 | 2,35 | 117 |
| 14.3.5 | | 0 | | 2 | | | | - | - | - |
| 14.4.1 | FA4 | 2,0 | S1 | 0 | 0 | 0 | - | 16,0 | 14,6 | - |
| 14.4.2 | | 1,9 | | 0,1 | | | | 14,9 | 6,92 | - |
| 14.4.3 | | 1,5 | | 0,5 | | | | 8,5 | 2,25 | - |
| 14.5.1 | FA4 | 2,0 1,9 1,5 | S1 | 0 | 1,2 | - | - | 0 | 0 | - |
| 14.5.2 | | | | 0,1 | | | | 0 | 0 | - |
| 14.5.3 | | | | 0,5 | | | | 0 | 0 | - |
| 14.6.1 | FA4 | 2,0 | S1 | 0 | 1,2 | 3,18 | 1:1 | 11,2 | 7,8 | 70 |
| 14.6.2 | | 1,9 | | 0,1 | | | | 7,0 | 1,75 | 47 |
| 14.6.3 | | 1,5 | | 0,5 | | | | 7,0 | 1,58 | 82 |

### Exemple 15

Dans cet exemple, on a préparé et testé des mousses avec des cycles d'ajustage du pH et l'ajout de Ca. Les mousses ont été préparées comme décrit dans le cadre de l'essai de stabilité, à partir d'une solution des composants de la formulation dont le pH a été ajusté à 9, et on a mesuré la hauteur de mousse FH et la demi-vie HL de la mousse afin de donner des valeurs «initiales». On a ajusté le pH à 3 en ajoutant de l'acide afin de détruire totalement les mousses ; on a ensuite ajouté de l'alcali pour ajuster le pH à 9 et reformer les mousses, les valeurs de FH et HL étant mesurées pour donner des valeurs de « Cycle 1 ». On a ensuite ajouté du CaCl₂.6H₂O en mélangeant pour avoir une concentration de CaCl₂ de 1,2 g.l⁻¹ ; on a ajusté le pH à 9, on a remis les formulations sous la forme de mousses et on les a pour avoir des valeurs de « Cycle la ». On a répété l'ajout d'acide pour détruire les mousses, l'ajout d'alcali, les opérations de remoussage et d'essai afin d'obtenir des résultats de « Cycle 2 ». Les formulations mises en oeuvre sont présentées dans le Tableau 15a et les propriétés mesurées des mousses sont présentées dans le Tableau 15b ci-après.

**Tableau 15a**

| Ex. n° | Agent moussant | | Stabilisateur | | EDTA |
|---|---|---|---|---|---|
| | Type | Conc. (% poids) | Type | Conc. (% poids) | (g.l⁻¹) |
| 14.1 | FA4 | 2 | - | - | 3,18 |
| 14.2 | FA4 | 1,9 | S1 | 0,1 | 3,18 |

**Tableau 15b**

| Ex. n° | Propriétés des mousses | | | | | | | |
|---|---|---|---|---|---|---|---|---|
| | Initiales | | Cycle 1 | | Cycle la | | Cycle 2 | |
| | FH | HL | FH | HL | FH | HL | FH | HL |
| | (cm) | (min) | (cm) | (min) | (cm) | (min) | (cm) | (min) |
| 14.1 | 16,3 | 12,03 | 12 | 11,02 | 8 | 1,8 | 7,5 | 0,75 |
| 14.2 | 16,7 | 8,53 | 16,5 | 7,37 | 5,2 | 1,0 | 5,5 | 0,55 |

### Exemple 16

La stabilité des mousses comprenant un épaississant polymérique cellulosique anionique lors de la contamination par différentes huiles a été étudiée avec une solution moussante aqueuse à un pH de 9 contenant 1,95 % de FA1, 0,05 % de S1, 1 fraction molaire de NaCl (env. 58,5 g.l⁻¹) et 3,16 g.l⁻¹ d'EDTA. Les mousses ont été préparées comme décrit pour l'essai de stabilité et l'huile a été ajoutée sous agitation modérée jusqu'à la rupture de la mousse. Le pourcentage en volume de cette quantité d'huile par rapport au volume total de mousse a été calculé et a servi à évaluer la stabilité de la mousse à la contamination par l'huile. Les résultats sont présentés dans le Tableau 16 ci-après. Ces données montrent que l'ajout d'un polymère cellulosique améliore la stabilité de la mousse, même en présence d'huiles hautement aromatiques. On a préparé des mousses similaires en utilisant une concentration supérieure en EDTA (9,48 g.l⁻¹) pour obtenir des produits utilisables dans des environnements présentant un fort taux de contamination par le Ca et présentant une tolérance à l'huile du même ordre.

**Tableau 16**

| Ex. n° | Polymère | | Huile | |
|---|---|---|---|---|
| | Type | g.l⁻¹ | Type | % en volume |
| 16.1.1 | - | 0 | Huile 1 | 2,8 |
| 16.1.2 | - | 0 | Huile 2 | > 20 |
| 16.1.3 | - | 0 | Huile 3 | < 0,5 |
| 16.1.4 | - | 0 | Huile 4 | 2,75 |
| 16.2.1 | Cell 1 | 1 | Huile 1 | 9,5 |
| 16.2.2 | Cell 1 | 1 | Huile 2 | > 20 |
| 16.2.3 | Cell 1 | 1 | Huile 3 | 5,75 |
| 16.2.4 | Cell 1 | 1 | Huile 4 | 6,25 |
| 16.3.1 | Cell 1 | 3 | Huile 3 | 7,75 |

## Revendications

1. Méthode de forage de puits comprenant l'évacuation des déblais de forage au moyen d'un fluide de forage aqueux sous forme d'une mousse **caractérisée en ce que** ladite mousse comprend un agent moussant constitué de ou comprenant au moins un mono-ester phosphate d'hydrocarbyle aliphatique, la dite mousse aqueuse comprend en outre au moins un stabilisateur de mousse qui est un sulfate d'alkyl-éther, un phosphate d'alkyl-éther soluble dans l'eau, un dérivé alcanolamide d'acide gras ou un oxyde d'amine.

2. Méthode selon la revendication 1, dans laquelle l'agent moussant présente une teneur en mono-ester phosphate d'au moins 75 % en poids.

3. Méthode selon l'une des revendications 1 ou 2, dans laquelle le mono-ester phosphate est un composé de formule (I) :
R¹O - (EO)ₙ - P(O)O₂ Hₓ Cat¹_{y}
où:
- R¹ désigne un groupe hydrocarboné aliphatique;
- EO un groupe éthylènoxy ;
- n est un nombre de 0 à 10;
- Cat¹ est un cation présentant une cationicité monovalente ;
- x est un nombre de 0 à 1 ;
- y est un nombre de 1 à 2 ; et
- x+y=2.

4. Méthode selon la revendication 3, dans laquelle Cat¹ est un ion potassium ou un cation dérivé d'une alcanolamine.

5. Méthode selon la revendication 4, dans laquelle l'alcanolamine est la diéthanolamine, la triéthanolamine, la méthyldiéthanolamine ou l'éthyl-diéthanolamine.

6. Méthode selon l'une des revendications 1 à 3, dans laquelle le stabilisateur de mousse est un tensioactif du type sulfate d'alkyl-éther de formule (II) :
R² - (OCH₂-CH₂)ₘ - OSO₃ Cat²
où:
- R² désigne un groupe alkyle de C₈ à C₁₆, plus généralement de C₁₀ à C₁₄ et notamment en C₁₂ ;
- m est un nombre de 1 à 10, plus généralement de 2 à 5 (et peut être non-entier) ; et
- Cat² est un cation présentant une cationicité monovalente.

7. Méthode selon l'une des revendications 1 à 3, dans laquelle le stabilisateur de mousse est un phosphate d'alkyl-éther soluble dans l'eau répondant à la formule (III) :
[R³O - (AO)ₙ₁]ₘ₂ - P(O) (OCat³ )k (III)
où :
- R³ désigne un groupe hydrocarboné aliphatique ;
- AO un groupe alkylènoxy, en particulier un groupe éthylènoxy ;
- n1 est un nombre de 10 à 25 ;
- m2 est un nombre de 1 à 2 ;
- k est un nombre de 1 à 2, avec k + m2 = 3 ; et
- Cat³ est un cation présentant une cationicité monovalente.

8. Méthode selon l'une des revendications 1 à 3, dans laquelle le stabilisateur de mousse est un dérivé alcanolamide d'acide gras de formule (IV) :
R⁴-CONH-(AO)ₘ₁ H (IV)
où:
- R⁴ désigne un hydrocarbyle de C₈ à C₂₂;
- AO est un groupe alkylènoxy ;
- m₁ est un nombre de 1 à 10.

9. Méthode selon l'une des revendications 6 et 7, dans laquelle Cat² et Cat³ sont respectivement un ion potassium et une espèce formant un sel dérivée d'une alcanolamine.

10. Méthode selon la revendication 9, dans laquelle l'alcanolamine est la diéthanol-amine, la triéthanolamine, la méthyldiéthanolamine ou l'éthyldiéthanolamine.

11. Méthode selon l'une des revendications 1 et 10, comprenant l'évacuation de déblais de forage par introduction dans le puits de ladite mousse, la phase aqueuse de la mousse ayant un pH au moins égal à 5, ainsi qu'un gaz, la mousse faisant remonter les déblais de forage jusqu'à la tête du puits et le pH de la mousse contenant les déblais étant ramené à un pH acide auquel la mousse se détruit, généralement un pH inférieur à 4, pour former une suspension aqueuse de déblais de forage, les déblais étant ensuite séparés de la suspension, ce qui permet de reformer une solution aqueuse d'agent moussant.

12. Méthode selon l'une des revendications 1 et 11, comprenant les étapes suivantes :
(i) on remonte les déblais de forage jusqu'à la tête du puits en introduisant dans le puits de ladite mousse, la phase aqueuse de la mousse ayant un pH d'au moins 5, ainsi qu'un gaz, et la mousse aqueuse est ramenée jusqu'à la tête du puits,
(ii) on ramène le pH de la mousse contenant les déblais de forage à un pH acide auquel la mousse se détruit, généralement un pH inférieur à 4, pour former une suspension aqueuse de déblais de forage,
(iii) on sépare les déblais de forage de la suspension pour produire une solution aqueuse d'agent moussant reformée,
(iv) on recycle la solution aqueuse à l'étape (i), en ajoutant à la solution aqueuse d'agent moussant les quantités nécessaires d'ingrédients frais tels que de l'eau et/ou un agent moussant.

13. Méthode selon la revendication 11 ou 12, dans laquelle la phase aqueuse de la mousse a un pH au moins égal à 7, de préférence au moins 8, et le pH acide n'est pas supérieur à 3.

14. Fluide de forage sous la forme d'une mousse aqueuse contenant un agent moussant, constituée de ou comprenant au moins un mono-ester phosphate d'hydrocarbyle aliphatique, en particulier sous forme d'un sel de potassium et/ou d'alcanolamine et/ou d'alkylalcanolamine, la mousse comprenant en outre un stabilisateur de mousse qui est un sulfate d'alkyl-éther, un phosphate d'alkyl-éther soluble dans l'eau, un dérivé alcanolamide d'acide gras ou un oxyde d'amine.

15. Fluide aqueux susceptible de former une mousse contenant un agent moussant, constitué de ou comprenant au moins un mono-ester phosphate d'hydrocarbyle aliphatique, en particulier sous forme d'un sel de potassium et/ou d'alcanolamine et/ou d'alkylalcanol-amine, et comprenant en outre un stabilisateur de mousse qui est un sulfate d'alkyl-éther, un phosphate d'alkyl-éther soluble dans l'eau, un dérivé alcanolamide d'acide gras ou un oxyde d'amine, le fluide aqueux ayant un pH au moins égal à 5.

## Claims

1. A method of drilling a well including the removal of drilling cuttings using an aqueous foam drilling fluid **characterized in that** the said foam comprises a foaming agent which is or includes at least one mono-(aliphatic hydrocarbyl) phosphate ester, the said aqueous foam additionally includes at least a foam stabiliser which is an alkyl ether sulphate, a water soluble alkyl ether phosphate, a fatty acid alkanolamide derivative, or an amine oxide.

2. A method as claimed in claim 1 wherein the phosphate ester foaming agent has a mono-ester content of at least 75%.

3. A method as claimed in either claim 1 or claim 2 wherein the phosphate ester is a compound of the formula (I):
R¹O - (EO)ₙ - P(O)O₂ Hₓ Cat¹_{y}
where:
R¹ is an aliphatic hydrocarbyl group;
EO is an ethyleneoxy group
n is from 0 to 10;
Cat¹ is a cation having monovalent cationicity;
x is from 0 to 1;
y is from 1 to 2; and x+y = 2.

4. A method as claimed in claim 3 wherein Cat¹ is a potassium ion or a cation derived from an alkanolamine.

5. A method as claimed in claim 4 wherein the alkanolamine is diethanolamine, triethanolamine, methyldiethanolamine or ethyldiethanolamine.

6. A method as claimed in any one of claims 1 to 3 wherein the foam stabiliser is an alkyl ether sulphate surfactant of the formula (II) :
R² - (OCH₂-CH₂)ₘ - OSO₃ Cat²
where:
R² is a C₈ to C₁₆, more usually a C₁₀ to C₁₄, and especially a C₁₂, alkyl group;
m is from 1 to 10, more usually from 2 to 5 (and may be non-integral);
Cat² is a cation having monovalent cationicity.

7. A method as claimed in any one of claims 1 to 3 wherein the foam stabiliser is a water soluble alkyl ether phosphate foam stabilisers can be of the formula (III):
[R³O - (AO)ₙ₁]ₘ₂ - P(O)(OCat³)ₖ (III)
where:
R³ is an aliphatic hydrocarbyl group;
AO is an alkyleneoxy group, particularly an ethyleneoxy group;
n1 is from 10 to 25;
m2 is from 1 to 2;
k is from 1 to 2; such that k+ m2 = 3
Cat³ is a cation having monovalent cationicity.

8. A method as claimed in any one of claims 1 to 3 wherein the foam stabiliser is a fatty acid alkanolamide derivative of the formula (IV):
R⁴-CONH-(AO)ₘ₁H (IV)
where
R⁴ is C₈ to C₂₂ hydrocarbyl;
AO alkyleneoxy; and
m₁ is from 1 to 10.

9. A method as claimed in claims 6 and 7 wherein Cat² or Cat 3 respectively is a potassium ion or a salt forming species derived from an alkanolamine.

10. A method as claimed in claim 9 wherein the alkanolamine is diethanolamine, triethanolamine, methyldiethanolamine or ethyldiethanolamine.

11. A method as claimed in any one of claims 1 to 10 which includes the removal of drilling cuttings by introducing into the bore of the well said aqueous foam, the aqueous phase of the foam having a pH of at least 5, and a gas; the foam lifting drilling spoil to the top of the wellbore; reducing the pH of the foam containing the drilling spoil to an acidic pH at which the foam collapses, usually to a pH below 4, to give an aqueous suspension of drilling cuttings; and separating the drilling cuttings from the suspension to give a reformed aqueous solution of the foaming agent.

12. A method as claimed in any one of claims 1 to 11 which includes the steps of:
i lifting drilling cuttings to the top of the wellbore by introducing into the bore of the well an aqueous foam, the aqueous phase of the foam having a pH of at least 5, and a gas, and raising the aqueous foam to the wellhead of the wellbore;
ii reducing the pH of the foam containing the drilling cuttings to an acidic pH at which the foam collapses,usually to a pH below 4, to give an aqueous suspension of drilling cuttings;
iii separating the drilling cuttings from the suspension to give a reformed aqueous solution of the foaming agent;
iv returning the aqueous solution to step (i), as necessary adding to the aqueous solution of the foaming agent fresh ingredients including water and/or foaming agent.

13. A method as claimed in either claim 11 or claim 12 in which the aqueous phase of the foam has a pH of at least 7, desirably at least 8, and the acidic pH is not more than 3.

14. A drilling fluid in the form of an aqueous foam which contains a foaming agent, which is or includes at least one mono-(aliphatic hydrocarbyl) phosphate ester foaming agent, particularly as a potassium and/or alkanolamine and/or an alkylalkanolamine salt, the foam additionally including a foam stabiliser which is an alkyl ether sulphate, a water soluble alkyl ether phosphate, a fatty acid alkanolamide derivative, or an amine oxide.

15. An aqueous foamable fluid containing a foaming agent, which is or includes at least one mono-(aliphatic hydrocarbyl) phosphate ester foaming agent, particularly as a potassium and/or alkanolamine and/or an alkylalkanolamine salt, and additionally including a foam stabiliser,which is an alkyl ether sulphate, a water soluble alkyl ether phosphate, a fatty acid alkanolamide derivative, or an amine oxide, the aqueous fluid having a pH of at least 5.

## Patentansprüche

1. Verfahren zum Bohren von Schächten, umfassend das Entfernen des Bahrabraums mittels einer wässrigen Bohrflüssigkeit in Form eines Schaums, **dadurch gekennzeichnet, dass** der Schaum einen Schaumbildner enthält, welcher aus mindestens einem Monophosphatester mit aliphatischem Kohlenwasserstoffrest besteht oder mindestens einen solchen Stoff enthält wobei der Schaum darüber hinaus mindestens einen Schaumstabilisator enthält und es sich bei dem Schaumstabilisator um ein Alkylethersulfat, ein wasserlösliches Alkyletherphosphat, ein Alkanolamidderivat von Fettsäuren oder ein Aminoxid handelt.

2. Verfahren nach Anspruch 1, wobei der Gehalt des Schaumbildners an Monophosphatester mindestens 75 % beträgt.

3. Verfahren nach einem der Ansprüche 1 oder 2, wobei der Phosphatester nach Formel (I) zusammengesetzt ist:
R¹O - (EO)ₙ - P(O) O₂ Hₓ Cat¹_{y}
in welcher:
- R¹ eine aliphatische Kohlenwasserstoffgruppe bezeichnet;
- EO eine Ethylenoxidgruppe ist;
- n eine Zahl von 0 bis 10 ist;
- Cat¹ ein einfach positiv geladenes Kation ist;
- x eine Zahl von 0 bis 1 ist;
- y eine Zahl von 1 bis 2 ist;
- x+y=2

4. Verfahren nach Anspruch 3, wobei Cat¹ ein Kaliumion oder ein von einem Alkanolamin abgeleitetes Kation ist.

5. Verfahren nach Anspruch 4, wobei es sich bei dem Alkanolamin um Diethanolamin, Triethanolamin, Methyl diethanolamin oder Ethyldiethanolamin handelt.

6. Verfahren nach einem der Ansprüche 1 bis 3, wobei es sich bei dem Schaumstabilisator um ein Tensid des Typs Alkylethersulfat nach Formel (II) handelt:
R² - (OCH₂-CH₂)ₘ - OSO₃ Cat²
in welcher:
- R² eine Alkylgruppe von C₈ bis C₁₆, im Allgemeinen von C₁₀ bis C₁₄ und insbesondere von C₁₂ bezeichnet;
- m eine Zahl von 1 bis 10, im Allgemeinen von 2 bis 5 ist (wobei es sich nicht um eine ganze Zahl handeln muss).
- Cat² ein einfach positiv geladenes Kation ist.

7. Verfahren nach einem der Ansprüche 1 bis 3, wobei es sich bei dem Schaumstabilisator um ein wasserlösliches Alkyletherphosphat nach Formel (III) handelt:
[R³O - (AO)_{n1]m2} - P(O) (OCat³)k (III)
in welcher:
- R³ eine aliphatische Kohlenwasserstoffgruppe bezeichnet;
- AO eine Aikylenoxidgruppe ist, insbesondere eine Ethylenoxidgruppe;
- n1 eine Zahl von 10 bis 25 ist;
- m2 eine Zahl von i bis 2 ist;
- k eine Zahl von 1 bis 2 ist, wobei k + m2 = 3 ist; und
- Cat³ ein einfach positiv geladenes Kation ist.

8. Verfahren nach einem der Ansprüche 1 bis 3, wobei es sich bei dem Schaumstabilisator um ein Alkanolamidderivat von Fettsäuren nach Formel (IV) handelt:
R⁴-CONH-(AO)ₘ₁ H (IV)
in welcher:
- R4 eine Kohlenwasserstoffgruppe von C₈ bis C₂₂ bezeichnet;
- AO eine Alkylenoxidgruppe ist;
- m₁ eine Zahl von 1 bis 10 ist.

9. Verfahren nach einem der Ansprüche 6 und 7, wobei es sich bei Cat² und Cat³ jeweils um ein Kaliumion und eine chemische Spezies handelt, die durch Salzbildung aus einem Aikanolamin entsteht.

10. Verfahren nach Anspruch 9, wobei es sich bei dem Alkanolamin um Diethanolamin, Triethanolamin, Methyldiethanolamin oder Ethyldiethanolamin handelt.

11. Verfahren nach einem der Ansprüche 1 bis 10, umfassend das Entfernen von Bohrabraum durch Einleiten des Schaums in den Schacht, wobei die wässrige Phase des Schaums einen pH-Wert von mindestens 5 aufweist, sowie ein Gas, und wobei der Schaum den Bohrabraum bis zum Schachtkopf befördert und der pH-Wert des Schaums, der den Bohrabraum enthält, auf einen sauren pH-Wert, der im Allgemeinen geringer als 4 ist, abgesenkt wird, bei welchem der Schaum sich zersetzt, sodass eine wässrige Suspension von Bohrabraum entsteht, aus welcher nach Abtrennung des Abraums erneut eine wässrige Schaumbildnerlösung gebildet werden kann.

12. Verfahren nach einem der Ansprüche 1 bis 11, die folgenden Schritte umfassend:
(i) Befördern des Bohrabraum bis zum Schachtkopf durch Einleiten des Schaums in den Schacht, wobei die wässrige Phase des Schaums einen pH-Wert von mindestens 5 aufweist, sowie ein Gas, und wobei der wässrige Schaum bis zum Schachtkopf befördert wird,
(ii) Absenken der pH-Werts des Schaums, der den Bohrabraum enthält, auf einen sauren pH-Wert, der im Allgemeinen geringer als 4 ist und bei welchem sich der Schaum zersetzt, sodass eine wässrige Suspension von Bohrabraum entsteht,
(iii) Abtrennen des Bohrabraums von der Suspension, um erneut eine wässrige Schaumbildnerlösung zu erhalten,
(iv) Rückführen der wässrigen Lösung zum Schritt (i), wobei der wässrigen Schaumbildnerlösung die erforderlichen Mengen an frischen Bestandteilen wie etwa Wasser und/oder ein Schaumbildner zugesetzt werden.

13. Verfahren nach Anspruch 11 oder 12, wobei die wässrige Lösung einen pH-Wert von mindestens 7, vorzugsweise mindestens 8, aufweist und der saure pH-Wert nicht höher als 3 liegt.

14. Bohrflüssigkeit in Form eines wässrigen Schaums, der einen Schaumbildner enthält, welcher aus mindestens einem Monophosphatester mit aliphatischem Kohlenwasserstoffrest besteht oder mindestens einen solchen Stoff enthält, insbesondere in Form einen Kaliumsalzes und/oder eines Alkanolaminsalzes und/oder eines Alkylalkanolaminsalzes wobei der Schaum darüber hinaus einen Schaumstabilisator enthält und es sich bei dem Schaumstabilisator um ein Alkylethersulfat, ein wasserlösliches Alkyletherphosphat, ein Alkanolamidderivat von Fettsäuren oder ein Aminoxid handelt.

15. Wässrige Flüssigkeit, die einen Schaum bilden kann, der einen Schaumbildner enthält, welcher aus mindestens einem Monophosphatester mit aliphatischem Kohlenwasserstoffrest besteht oder mindestens einen solchen Stoff enthält, und welcher insbesondere in Form einen Kaliumsalzes und/oder eines Alkanolaminsalzes und/oder eines Alkylalkanolaminsalzes vorliegt, und die darüber hinaus einen Schaumstabilisator enthält, wobei es sich bei dem Schaumstabilisator um ein Alkylethersulfat, ein wasserlösliches Alkyletherphosphat, ein Alkanolamidderivat von Fettsäuren oder ein Aminoxid handelt und wobei die wässrige Flüssigkeit einen pH-Wert von mindestens 5 aufweist.
